# EUROPÄISCHE PATENTANMELDUNG

(11) **EP 1 961 396 A1**
(43) Veröffentlichungstag der Anmeldung: **27.08.2008**
(21) Anmeldenummer: 08003005.9
(22) Anmeldetag: 19.02.2008
(51) Int. Cl.: A61C 7/30

(54) **Kieferorthopädisches Bracket mit elastischer Aufnahme- und Befestigungsvorrichtung**

(30) Priorität: 20.02.2007 DE 102007008356
(71) Anmelder: Jahn, Ingolf, 35037 Marburg (DE)
(72) Erfinder: Jahn, Ingolf, 35037 Marburg (DE)

(57) **Zusammenfassung**

In einem kubusförmigen Bracket, dessen Unterseite auf einem Zahn befestigt ist und auf der Oberseite eine Aussparung aufweist, die zusammen mit den Aussparungen der an den benachbarten Zähnen angebrachten Brackets eine durchgehende Nut bilden, ist ein elastisches Element angeordnet, das aus zwei blattfö'rmi*gen Federn besteht, zwischen denen ein Behandlungsdraht elastisch festklemmbar ist.

## Beschreibung

Kieferorthopädische Brackets sind bekanntlich Haltevorrichtungen, mit denen an Zähnen ein Draht, der die Form eines idealen Zahnbogens hat, befestigt wird. Auf die Zähne, die in ihrer Stellung von der Bogenform dieses Behandlungsdrahtes abweichen, werden über die Brackets Kräfte übertragen, die unkorrekten Zahnstellungen entgegenwirken.

Da die auf die Zähne einwirkenden Kräfte nicht zu groß sein dürfen, werden die Drahtstärken stufenweise gesteigert. Der Drahtbogen muss wahrend einer Behandlung immer wieder gewechselt werden (Bogensequenz).

Ein Bracket besteht in der Regel aus einem metallischen Kubus, der mit seiner Unterseite auf der Zahnaußenseite befestigt ist. Die Oberseite des Brackets ist mit einer Aussparung versehen, die zusammen mit den Aussparungen der Brackets an den benachbarten Zähnen eine fortlaufende Nut bildet.

Der Querschnitt der Aussparungen in den Brackets, in die der Behandlungsdraht eingebracht wird, ist in der Regel rechtwinklig. Dieser Form ist der Querschnitt des Behandlungsdrahtes angepasst, wodurch es möglich wird, Kräfte auch zur Korrektur der Achsenneigung der Zähne (Torque) zu übertragen. Man spricht von Kantbogentechnik. Zur Steuerung der Torquewirkung ist es notwendig, die Stärke des Behandlungsdrahtes zu verändern.

Ist der Behandlungsdraht in die Nut eingelegt, dienen üblicherweise Gummiringe oder Bindedrähte zu dessen Fixierung. Dabei werden diese Ringe oder Drähte um seitlich zur Nut verlaufende Flügel geführt.

Eine Fixierung des Behandlungsdrahtes dieser Art hat den Nachteil, dass die Ausrichtung der Kräfte auf die zu korrigierende Zähne Schwierigkeiten bereitet und damit die angestrebte Korrektur nicht optimal erreichbar ist.

Bekannt sind ferner Brackets mit integrierter Befesttgungsvorrichtung. Diese so genannten selbsttigierenden Brackets verfügen über einen Verschluss, der meistens verschiebbar ist, um den in der Aussparung befindlichen Draht am Austreten zu hindern (passiv).

Hierzu ist aus der EP 1 235 528 B1 ein Bracket bekannt, dessen Behandlungsdraht in der Aussparung mit Hilfe mehrerer Riegel arretierbar ist, wobei der Behandlungsdraht am Boden der Aussparung auf einem Federelement aufliegt.

Weiter geht aus der DE 602 14 378 T2 hervor, dass als Verschluss auch eine Feder dienen kann, die auf der von der Aussparung nicht umfassten Seitenfläche des Drahtes aufliegt (aktiv). Die anderen Seitenflächen des Drahtes sind den Seitenwänden bzw. dem Boden der Aussparung zugeordnet Das Einbringen von annähernd ausfüllenden Drahtquerschnitten ist nur dadurch möglich, dass stufenweise Drähte mit zunehmendem Querschnitt eingesetzt werden bis die Bracketaussparungen - mit fortschreitender Korrektur der vom idealen Drahtbogen abweichenden Zähne - die Aufnahme des größten Querschnitts erlauben.

Es ist Aufgabe der Erfindung, die Haltevorrichtung für den Behandlungsdraht so zu gestalten, dass die Anbringung und die Abnahme des Drahtes vereinfacht und die zur Korrektur von Zahnstellungen benötigte Kraftübertragung verbessert werden.

Bei einem Bracket für kieferorthopädische Behandlungen, dessen Unterseite auf einem Zahn befestigt ist und auf der Oberseite eine Aussparung aufweist, die zusammen mit den Aussparungen der an den benachbarten Zähnen angebrachten Brackets eine durchgehende Nut bilden, besteht die Lösung dieser Aufgabe darin, dass in der Aussparung des Brackets mindestens ein elastisches Element angeordnet ist, mit dem ein Behandlungsdraht elastisch festklemmbar ist, dass als elastisches Element eine blattförmige Feder einer Seitenwand der Aussparung zugeordnet ist und die Feder mit dem einen Ende am oberen Rand der Aussparung aufliegt und mit dem anderen Ende am Boden der Aussparung befestigt ist.

Bei der Anordnung nach der Erfindung kann der maximale Drahtquerschnitt bereits angewendet werden, wenn die Ausrichtung der Zähne noch nicht weit fortgeschritten ist, also zu einem wesentlich früheren Zeitpunkt der Behandlung als bisher. Der Behandlungsdraht muss nicht mehr gewechselt werden, wenn unkorrekt stehende Zähne noch nicht vollstandig ausgerichtet sind, weil das elastische Element bei unkorrekten Zahnstellungen ausgelenkt wird. Dadurch wird so lange Kraft über die Brackets auf die Zähne ausgeübt, bis die angestrebte Ausrichtung erreicht ist.

Darüber hinaus wird die Anbringung des Behandlungsdrahtes an den Brackets wesentlich vereinfacht, so dass sich die für eine kieferorthopädische Behandlung erforderliche Zeit und damit auch die jeweils anfallenden Kosten erheblich verringern lassen. Die Anbringung von Gummiringen oder Bindedrahten erübrigt sich ebenso wie die Anordnung eines Verschlusses zur Fixierung des Behandlungsdrahtes.

Gemäß einer weiteren Ausgestaltung der Erfindung ist vorgesehen, dass der Seitenwand, die der oben genannten Seitenwand gegenüber liegt, eine zweite blattförmige Feder baugleich zugeordnet ist, dass beide Federn zu den benachbarten Seitenwänden auslenkbar angeordnet sind, und dass beide Federn im oberen Bereich der Aussparung parallel zu den gegenüberliegenden Seitenwänden vorgewölbt sind, wobei die beiden Federn an den vorgewölbten Stellen einen Spalt bilden, der sich beim Eindrücken eines Behandlungsdrahtes öffnet. Durch den Spalt gedrückt, wird der Behandlungsdraht in der Aussparung des Brackets von den zurückfedernden Elementen gehalten. Damit ist erreicht, dass der Behandlungsdraht ohne zusätzliche Befestigung in der Nut fixiert, ist.

Eine Variante der Erfindung sieht vor, auf den Bracketaußenflächen Einrastkerben anzuordnen, in die ein entsprechend geformter Knick in der Auflagefläche der Feder einrastet. Damit wird erreicht, dass der Widerstand gegen unbeabsichtigtes Herausgehen des Behandlungsdrahtes aus der Aussparung erhöht wird.

Ein weiteres Merkmal betrifft die Form des Behandlungsdrahtes. Erfindungsgemäß ist dieser im Querschnitt rechteckig geformt bis auf eine Seitenfläche an der Außenseite des Behandlungsdrahtes, die eine abgerundete Form aufweist Der Vorteil dabei Ist der einer optimalen Klemmwirkung, weil die Form des Behandlungsdrahtes der der beiden Federn bzw. der Aussparung entspricht. Solange ein Zahn noch nicht die angestrebte Ausrichtung erreicht hat, besteht eine Diskrepanz zwischen der Ausrichtung des Behandlungsdrahtes und der des Brackets. Durch diese Diskrepanz sind die Federn aus ihrer Ruheposition ausgelenkt und üben dadurch eine Kraft auf das System Draht-Bracket-Zahn aus. Man erreicht das für die Zahnbewegung Optimale: Es wird auf die unkorrekt stehenden Zähne eine leichte kontinuierlich wirkende Kraft ausgeübt.

Weitere Merkmale und Vorteile der Erfindung ergeben sich aus der Zeichnung zweier Ausführungsbeispiele, und zwar zeigt
- Fig. 1: ein Bracket nach einer ersten Ausführungsform Im Querschnitt gemäß A - A
- Fig. 2: eine Draufsicht auf ein kieferorthopädisches Bracket nach Fig. 1
- Fig. 3: eine Ausschnittszeichnung eines Brackets im Querschnitt gemäß A - A mit einem eingeklemmtem Behandlungsdraht
- Fig. 4: eine Ausschnittszeichnung eines Brackets nach einer zweiten Ausführungsform mit Einrastkerben im Querschnitt gemäß A - A
- Fig. 5: eine Ausschnittszeichnung eines Brackets gemäß Fig. 4 mit eingelegtem Behandlungsdraht bei geöffneter Feder
- Fig. 6: eine Ausschnittszeichnung eines Brackets gemäß Fig. 4 mit eingelegtem Behandlungsdraht bei geschlossener Feder.

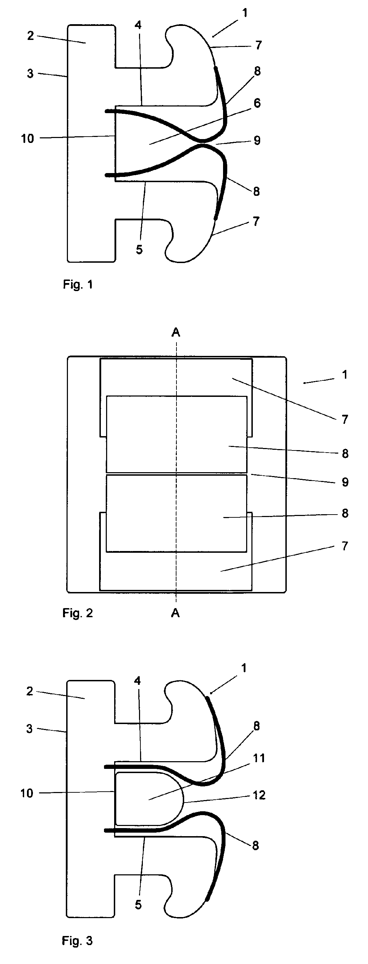

Das Bracket besteht - wie Fig. 1 zeigt - aus einem kubusformigen Körper (1), dessen Basis (2) mit der Unterseite (3) an einem in der Zeichnung nicht dargestellten Zahn befestigt - in der Regel angeklebt - ist Auf der Basis (2) sind zwei parallel verlaufende Seitenwande (4,5) fest angeordnet, die eine Aussparung (6) bilden. An den Zähnen eines Kiefers aneinandergereiht bilden die Aussparungen (6) der befestigten Brackets eine durchgehende Nut (nicht dargestellt).
Die Seitenwände (4,5) der Aussparung (6) sind an ihren gegenüberliegenden, freien Enden im rechten Winkel nach außen geführt und bilden dort abgerundete Auflageflächen (7) für zwei baugleiche blattförmige Federn (8). Von den Auflageflächen (7) aus sind die beiden Federn (8) zur Mitte der Aussparung (6) hin bis zu einem Spalt (9) vorgewölbt. Ab dem Spalt (9) verringert sich der Abstand der Federn (8) zu den benachbarten Seitenwänden (4,5), ohne diese zu erreichen. Befestigt sind die Federn (8) am Boden (10) der Aussparung (6).

Fig. 2 zeigt die beiden gegenüborliegenden Federn (8), deren aus der Aussparung (6) herausragenden Enden sich auf den Auflageflächen (7) abstützen und zwischen sich den Spalt (9) lassen.

In Fig.3 ist ein Behandlungsdraht (11) zwischen den Federn (8) eingeklemmt Die Seitenflächen des Behandlungsdrahtes (11) verlaufen parallel zu den Seitenwänden (4,5) und dem Boden (10) der Aussparung (6). Zur offenen Seite der Aussparung (6) hin ist eine Seitenfläche abgerundet (12). Die Federn (8), die den Behandlungsdraht (11) festklemmen, haben in der Aussparung (6) genügend Spielraum, so dass sie auslenkbar sind.

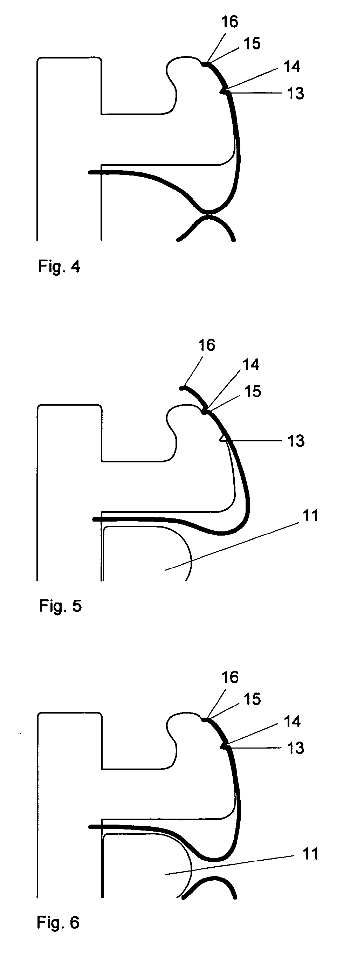

Fig 4 zeigt in einer Ausschnittszeichnung eine Variante des in Fig. 1-3 dargestellten Brackets, bei dem sich in den Auflageflächen (7) Einrastkerben (13) befinden. Die Federn (8) haben einen Knick (14), der im geschlossenen Zustand in der Einrastkerbe (13) ruht. Am Ende der Auflagefläche (7) befindet sich eine weitere Einkerbung (15), in die der Knick (14) in geöffnetem Zustand einrasten kann, wodurch die Feder (8) geöffnet gehalten wird (Fig. 5). Das offene Ende der Feder (8) ist nach Innen gebogen, so dass eine schmale Fläche (16) entsteht, die es ermöglicht, die Feder (8) mit Fingerdruck vom offenen in den geschlossenen Zustand zu bringen (Fig. 6).

### Bezugszeichenliste:

- 1: Bracket
- 2: Basis
- 3: Unterseite
- 4: Seitenwand
- 5: Seitenwand
- 6: Aussparung
- 7: Auflageflache
- 8: Federn
- 9: Spalt
- 10: Boden der Aussparung
- 11: Behandlungsdraht
- 12: abgerundete Seite des Behandlungsdrahtes
- 13: Einrastkerbe
- 14: Einkerbung
- 15: Knick

## Patentansprüche

1. Bracket für kieferorthopädische Behandlungen, dessen Unterseite auf einem Zahn befestigt ist und auf der Oberseite eine Aussparung aufweist, die zusammen mit den Aussparungen der an den benachbarten Zähnen angebrachten Brackets eine durchgehende Nut bilden,
**dadurch gekennzeichnet,**
**dass** in der Aussparung (6) des Brackets mindestens ein elastisches Element angeordnet ist, mit dem ein Behandlungsdraht (11) elastisch festklemmbar ist, dass als elastisches Element eine blattförmige Feder (8) einer Seitenwand (4) der Aussparung (6) zugeordnet ist und die Feder mit dem einen Ende am oberen Rand der Aussparung (6) aufliegt und mit dem anderen Ende am Boden (10) der Aussparung (6) befestigt ist

2. Bracket nach Anspruch 1, **dadurch gekennzeichnet,**
**dass** der gegenüberliegenden Seitenwand (5) der Aussparung (6) eine zweite blattförmige Feder (8) baugleich zugeordnet ist, dass beide Federn (8) zu den benachbarten Seitenwänden (4,5) auslenkbar angeordnet sind, und dass beide Federn (8) im oberen Bereich der Aussparung (6) parallel zu den gegenüberliegenden Seitenwänden (4,5) vorgewölbt sind, wobei die beiden Federn (8) an den vorgewölbten Stellen einen Spalt (9) bilden.

3. Bracket nach Anspruch 1, **dadurch gekennzeichnet, dass** sich auf den Bracketaußenflächen Einrastkerben (13) befinden, in die ein entsprechend geformter Knick (14) in der Auflagefläche (7) der Feder (8) einrastet.

4. Bracket nach Anspruch 1, **dadurch gekennzeichnet, dass** der Behandlungsdraht (11) im Querschnitt rechteckig geformt ist bis auf eine seitenfläche (12) an der Außenseite des Behandlungsdrahtes (11), die eine abgerundete Form aufweist.
